# EUROPÄISCHE PATENTANMELDUNG

(11) **EP 4 549 343 A1**
(43) Veröffentlichungstag der Anmeldung: **07.05.2025**
(21) Anmeldenummer: 23207366.8
(22) Anmeldetag: 02.11.2023
(51) Int. Cl.: B65G 1/04, B65G 1/10, B65G 47/60

(54) **SORTIERANORDNUNG MIT ZWEI SENKRECHT ZUEINANDER STEHENDEN SORTIEREBENEN**

(71) Anmelder: BEUMER Group GmbH & Co. KG, 59269 Beckum (DE)
(72) Erfinder: HANAWEG, Harald, 8143 Dobl-Zwaring (AT)
(74) Vertreter: Angerhausen, Christoph

(57) **Zusammenfassung**

Die Erfindung betrifft eine Sortieranordnung (1) für Güter und Waren (2), wobei die Sortieranordnung (1) mindestens einen ersten Sorter (3) mit ersten Lastaufnahmemitteln (4), die in einer ersten Sortierebene gefördert sind, und mindestens einen zweiten Sorter mit mindestens einem zweiten Lastaufnahmemittel (7) aufweist, die in einer zu der ersten Sortierebene senkrecht stehenden zweiten Sortierebene gefördert sind, dadurch gekennzeichnet, dass die Sortieranordnung (1) eine Übergabe (8) aufweist, an der wenigstens eines der ersten Lastaufnahmemittel (4), vorzugsweise unmittelbar, in das mindestens eine zweite Lastaufnahmemittel (7) entleert ist. Es wird weiterhin ein entsprechendes Verfahren beschrieben.

## Beschreibung

Die Erfindung geht aus von einer Sortieranordnung für Güter und Waren, insbesondere Post- und Kuriersendungen, wobei die Sortieranordnung mindestens einen ersten Sorter mit ersten Lastaufnahmemitteln, die in einer ersten Sortierebene gefördert sind, und mindestens einen zweiten Sorter mit mindestens einem zweiten Lastaufnahmemittel aufweist, die in einer zu der ersten Sortierebene senkrecht stehenden zweiten Sortierebene gefördert sind. Eine derartige Sortieranordnung ist aus der EP 4 194 109 A1 und aus der EP 3 820 620 B1 bekannt.

Die bekannten Sortieranordnungen haben den Nachteil, dass die Schnittstelle zwischen dem Umlaufsorter und dem Regallager nur mit erheblichem Aufwand für hohe Sortierkapazitäten skalierbar ist. Es ist daher die Aufgabe der Erfindung, die eingangs beschriebene Sortieranordnung derart weiterzuentwickeln, dass sie auch bei hohen Auslastungen einen prozesssicheren Übergang von Waren und Gütern zwischen dem ersten Sorter und dem zweiten Sorter erlaubt.

Diese Aufgabe wird durch eine Sortieranordnung mit den Merkmalen des Anspruchs 1 gelöst. Der nebengeordnete Anspruch 12 betrifft ein entsprechendes Verfahren. Vorteilhafte Ausführungsformen der Erfindung sind jeweils Gegenstand der abhängigen Ansprüche.

Demgemäß ist vorgesehen, dass die Sortieranordnung eine Übergabe aufweist, an der wenigstens eines der ersten Lastaufnahmemittel, vorzugsweise unmittelbar, in das mindestens eine zweite Lastaufnahmemittel entleert ist. Die optional unmittelbare Entleerung des wenigstens einen ersten Lastaufnahmemittels in das mindestens eine zweite Lastaufnahmemittel kann insbesondere ohne ein zwischen dem ersten und dem zweiten Lastaufnahmemittel wirkendes Transportmittel erfolgen. Beispielsweise kann das unmittelbare Entleeren das Abwerfen oder das Kippen eines in dem entleerten ersten Lastaufnahmemittel gehaltenen Guts oder einer Ware in das zweite Lastaufnahmemittel aufweisen. Dies erlaubt es, dass z.B. von einem Umlaufsorter an der Übergabe bereitgestellte Waren und Güter unmittelbar von dem zweiten Sorter, etwa einem Regallager, insbesondere von einem Bediengerät, das das zweite Lastaufnahmemittel hält, übernommen werden können, etwa für die Weitergabe und die Zwischenspeicherung der übergebenen Ware oder des übergebenen Guts in einer Endstelle des zweiten Sorters, etwas in einem Behälter, in einem Regalfach eines Regallagers. Dazu kann das zweite Lastaufnahmemittel beispielsweise in einen Transportbehälter oder in einen Versandbehälter übergeben, beispielsweise in einen Karton, eine Kiste oder einen Beutel, der/die in dem Regal zwischengespeichert ist. Optional kann auf Anforderung das Bediengerät dazu eingerichtet sein, die Endstelle aus dem Regal zu entnehmen, etwa einen Versandbehälter, und beispielsweise für den Versand bereitstellen.

Eine Endstelle des ersten Sorters, etwa eines Umlaufsorters, kann in einem Kommissionierbereich des Regallagers angeordnet sein.

Die Übergabe kann auf verschiedene Weise realisiert sein. Beispielsweise kann der erste Sorter, etwa ein Umlaufsorter, dazu eingerichtet sein, die von seinen ersten Lastaufnahmemitteln transportierten Güter und Waren unmittelbar in ein oder mehrere zweite Lastaufnahmemittel des zweiten Sorters, etwa eines automatischen Regallagers zu übergeben. Das zweite Lastaufnahmemittel kann eine Haltevorrichtung des Regalbediengeräts sein, beispielsweise eine Schale. Wenn das zweite Lastaufnahmemittel eine Schale des Regalbediengeräts ist, kann die Schale eine kippbare Schale sein, zum Beispiel um eine in der Schale aufgenommene Ware oder ein Gut in eine Endstelle des zweites Sorters, etwas eines Regallagers abzuwerfen, beispielsweise in einen Versandbehälter, etwa einen Karton oder einen Beutel, welcher beispielsweise in einem Regalfach eines Regallagers vorgehalten wird. Alternativ kann das zweite Lastaufnahmemittel selbst ein Versandbehälter, etwa ein Karton oder ein Beutel, sein, der von einem Bediengerät oder einer anderen dazu eingerichteten Vorrichtung, etwa einem Roboter, transportiert wird.

Alternativ kann das zweite Lastaufnahmemittel die Endstelle halten und die Endstelle kann von einem Bediengerät in der zweiten Sortierebene bewegt werden. Das zweite Lastaufnahmemittel kann beispielsweise einen Versandbehälter, zum Beispiel einen Karton oder einen Beutel halten. Vorzugsweise sind bei dieser Ausführungsform eine Vielzahl dieser Endstellen bereitgestellt, die beispielsweise in einer Vielzahl Regalfächer eines Regallagers einzeln vorgehalten sind und von einem Bedienengerät des Regallagers aus einem Regalfach entnommen und darin abgelegt werden können.

Die Übergabe kann durch Abwerfen der von dem ersten Lastaufnahmemittel gehaltenen Ware oder des Guts unmittelbar auf bzw in das bzw. eines der zweiten Lastaufnahmemittel oder unmittelbar in eine von dem zweiten Lastaufnahmemittel gehaltene Endstelle erfolgen, oder mittelbar, mit Hilfe einer Rutsche, auf welche die ersten Lastaufnahmemittel die Güter und Waren abwerfen und welche in das bzw. mindestens eines der zweiten Lastaufnahmemittel mündet. Bei dieser Ausführungsform kann vorgesehen sein, dass mit dem Regalbediengerät eine Endstelle an der Übergabe bereitgestellt wird. Beispielsweise kann das Regalbediengerät dazu eingerichtet sein, eine Endstelle, etwa ein Behälter, aus einem Regalfach des Regallagers zu entnehmen und an der Übergabe zu positionieren, sodass das erste Lastaufnahmemittel in die Endstelle entleert werden kann.

Der mindestens eine Umlaufsorter kann ein Liegesorter sein, beispielsweise ein Quergurtsorter (cross belt sorter) oder ein Kippschalensorter (tilt-tray sorter). Ein derartiger Umlaufsorter ist in der EP 4 115 994 A1 beschrieben. Der Umlaufsorter muss nicht zwingend als Kreissorter ausgebildet sein. Der Umlaufsorter kann auch als Liniensorter ausgebildet sein, wie er zum Beispiel in der US 2004/0069593 A1 beschrieben ist. Einen geeigneten Kippschalensorter beschreibt die US 2004/0069593 A1. Der Umlaufsorter kann auch ein Taschensorter (pouch sorter) sein, wie es beispielsweise in der EP 3 670 393 A1 beschrieben ist. Der Umlaufsorter kann auch eine Kombination aus einem Liegesorter und einem Taschensorter sein, wie es in der EP 4115994 A1 beschrieben ist. Das automatische Regallager kann ein automatisches Kleinteilelager sein. Ein derartiges Regallager ist in der CN 113003237 B beschrieben. Besonders bevorzugt ist der erste Sorter ein Taschensorter und der zweite Sorter ein Regallager.

Das Regallager ist auf keine besonderen Ausführungsformen beschränkt. Insbesondere können die Regale freistehende Regale sein, die vertikal übereinander und gegebenenfalls zusätzlich horizontal nebeneinander eine Vielzahl Regalfächer aufweisen. Die Regale können auf Rollen stehen und somit verfahrbar sein. Die Regale müssen insbesondere keine Regale eines automatischen Regallagers sein. Der Transport des zweiten Lastaufnahmemittels von der Übergabe zu einem der Regalfächer kann mit einem Regalbediengerät, aber auch mit jedem anderen dazu technisch ausgelegten Hilfsmittel erfolgen. Beispielsweise kann ein Roboter vorgesehen sein, beispielsweise ein Mehrachsroboter, welcher an der Übergabe das zweite Lastaufnahmemittel zur Entgegennahme einer Ware oder eines Gutes zur Verfügung stellt, oder eine Endstelle, beispielsweise einen Versandbehälter, der unmittelbar an der Übergabe in der zuvor beschriebenen Weise gefüllt wird, wobei der Roboter dazu eingerichtet ist, die befüllte Endstelle in einem Regalfach abzulegen, zum Beispiel bis sie abgerufen wird. Auf Abruf kann der Roboter dazu eingerichtet sein, die befüllte Endstelle aus dem Regalfach wieder zu entnehmen und beispielsweise dem Versand zuzuführen, beispielsweise einer Verpackungsstation, wenn die Endstelle ein Versandbehälter ist. Der Roboter kann im Übrigen dazu eingerichtet sein, die versandfertige Verpackung der Endstelle, insbesondere eines Versandbehälters, selbsttätig durchzuführen, zum Beispiel einschließlich eines Schließens des Versandbehälters sowie einer Etikettierung und gegebenenfalls Frankierung des Versandbehälters.

Die Übergabe kann dazu eingerichtet sein, Güter und Waren unmittelbar von einem der ersten Lastaufnahmemittel in das mindestens eine zweite Lastaufnahmemittel zu übergeben, vorzugsweise abzuwerfen oder zu kippen. Dadurch wird erreicht, dass keine zusätzlichen dynamischen Hilfsmittel erforderlich sind, um Güter und Waren von dem ersten Sorter, etwa einem Umlaufsorter in den Zugriffsbereich des zweiten Sorters, zu verbringen. Es sind somit insbesondere keine Transportmittel wie Förderbänder oder fahrerlose Transportsysteme (AGVs) erforderlich.

Eine Endstelle des ersten Sorters, etwa eines Umlaufsorters, im Sinne der vorliegenden Erfindung bedarf nicht zwingend einer Vorrichtung und kann zumindest bei einer Ausführungsform allein dadurch realisiert sein, dass an einer bestimmten Position der Sortieranordnung, welche in oder an der Übergabe angeordnet ist, der erste Sorter dazu eingerichtet ist, ein an der Position angeordnetes erstes Lastaufnahmemittel zu entladen. Das Entladen kann beispielsweise das Ansteuern eines Quergurts eines Quergurtsorters, das Verkippen einer Schale eines Kippschalensorters, oder das Entleeren einer Tasche eines Taschensorters aufweisen, oder noch anders ausgebildet sind. Die Endstelle des ersten Sorters kann bei einer Ausführungsform eine Rutsche sein oder aufweisen. Die Endstelle des ersten Sorters kann bei noch einer anderen Ausführungsform eine Endladestation aufweisen, an welcher, wenn der Umlaufsorter ein Taschensorter ist, eine Tasche des Umlaufsorters entleert wird.

Besonders bevorzugt ist der erste Sorter als ein Taschensorter ausgebildet. Dabei erfolgt das Entladen besonders bevorzugt durch Entleeren einer Tasche, welche das erste Lastaufnahmemittel bildet, in das zweite Lastaufnahmemittel. Dabei kann eine Ware oder ein Gut aus der Tasche in das zweite Lastaufnahmemittel, etwa eine Aufnahme eines Bediengeräts eines Regallagers oder ein Versandbehälter, etwa ein Karton oder ein Beutel, fallen. Dazu kann die Tasche oberhalb von dem zweiten Lastaufnahmemittel angeordnet sein. Für das Entleeren kann ein Taschenboden der Tasche geöffnet werden. Die Ansteuerung der einer Schließmechanik der Tasche zum Öffnen des Taschenbodens kann kontaktlos oder durch mechanische Einwirkung auf den Taschenboden erfolgen. Besonders bevorzugt ist in dem Taschenboden ein drahtlos oder drahtgebunden ansteuerbarer Aktor, beispielsweise ein Stellmotor, angeordnet, welcher eine wiederverschließbare Rastverbindung zweier Taschenbodenhälften auslösen kann.

Das Bediengerät kann dazu eingerichtet sein, selbsttätig das mindestens eine zweite Lastaufnahmemittel, beispielsweise auch zur Oberseite offene Behälter, etwa Versandbehälter, zwischen der Übergabe und einem Regalfach des Regallagers zu transportieren. Jedem Regalfach kann ein Kommissionierauftrag zugeordnet sein. Jeder Kommissionierauftrag kann die Anforderung mehrerer Objekte aufweisen, die an der Übergabe von dem ersten Sorter in das zweite Lastaufnahmemittel, etwa einen Behälter übergeben, beispielsweise dort hinein abgeworfen, werden können. Die Behälter können Versandverpackungen sein, beispielsweise Beutel oder Kartons. So ist es möglich, für den Versand vorgesehene Güter und Waren mit dem Umlaufsorter unmittelbar in eine Versandverpackung zu dosieren, die im Zugriffsbereich des Regellagers ist und bis zum Versand in einem Regalfach des Regallagers zwischengespeichert werden kann. Das Regalfach kann somit ein Zwischenpuffer für die Behälter sein, insbesondere wenn sie Versandbehälter sind, wobei die mit wenigstens einem Objekt beladenen Behälter erst auf Anforderung einem Verpackungsplatz zugeführt werden können, vorzugsweise mithilfe des Regalbediengeräts. An dem Verpackungsplatz können die Behälter versandfertig gemacht werden, beispielsweise verschlossen und mit einer Adressierung versehen werden. Die Regalfächer können unterschiedliche Dimensionen aufweisen, wobei das Regalbediengerät dazu eingerichtet ist, abhängig von einer Abmessung, einem Volumen oder einer sonstigen objektspezifischen Information einen Behälter in einem in Bezug auf die objektspezifische Information geeigneten Regalfach abzulegen.

Der mindestens eine erste Sorter, etwa ein Umlaufsorter, kann dazu eingerichtet sein, an der Übergabe mindestens eines der ersten Lastaufnahmemittel unmittelbar in das zweite Lastaufnahmemittel zu entleeren. Das erste Lastaufnahmemittel kann dazu beispielsweise ein Quergurt eines Liegesorters sein, welches quer zur Förderrichtung angetrieben werden kann, um eine auf dem Quergurt liegende Ware oder ein darauf liegendes Gut von dem Sorter abzuwerfen. Wenn der Umlaufsorter ein Kippschalensorter ist, kann das erste Lastaufnahmemittel eine Kippschale sein, welche für das Entleeren an der Übergabe verkippt wird. Wenn der Umlaufsorter ein Taschensorter ist, kann die Tasche an der Übergabe entleert werden, beispielsweise durch Öffnen eines Taschenbodens. Das Öffnen kann durch äußere Einwirkung auf einen Verschlussmechanismus am Taschenboden oder mit Hilfe eines im Taschenboden integrierten und drahtlos ansteuerbaren Aktors erfolgen.

Die Übergabe kann eine Rutsche für Waren und Güter aufweisen, auf welche die ersten Lastaufnahmemittel entleert werden können und welche abstromseitig in das bzw. eines der zweiten Lastaufnahmemittel mündet. Die Verwendung einer Rutsche ist insbesondere dann zweckmäßig, wenn bei hohen Taktleistungen bzw. Umlaufgeschwindigkeiten des Umlaufsorters für Waren und Güter unterschiedlicher physikalischer Eigenschaften (insbesondere Größe, Gewicht, Dichte) eine exakte Abwurfposition an der Übergabe nicht präzise sichergestellt werden kann.

Wenn der mindestens eine Umlaufsorter ein Taschensorter ist, kann an der Übergabe eine Taschenentleerung angeordnet sein, mit der mindestens eines der ersten Lastaufnahmemittel in das mindestens eine zweite Lastaufnahmemittel entleert ist. Die Entleerung kann unmittelbar von dem ersten Lastaufnahmemittel in eines der zweiten Lastaufnahmemittel erfolgen, vorzugsweise durch Abwerfen, entweder unmittelbar von dem ersten Lastaufnahmemittel in das zweite Lastaufnahmemittel oder unter Verwendung einer Rutsche.

Das Regallager kann ein auf Rollen verfahrbares Regalgestell mit einer Mehrzahl übereinander angeordneter Regalfächer aufweisen. Alternativ kann das Regalgestell nicht verfahrbar, mithin statisch, ausgebildet sein. Mehrere Regalgestelle können in einer Reihe aufgestellt sein, entlang welcher das Bediengerät, etwa ein Regalbediengerät verfahrbar ist. Die Regalgestelle können in mehreren parallelen Reihen aufgestellt sein, zwischen denen das Regalbediengerät verfahrbar ist. Das Regalbediengerät kann in der Horizontalebene parallel zu den Reihen und in Vertikalrichtung verfahrbar sein. Das wenigstens eine Regalgestell kann mit einem fahrerlosen Transportsystem (AGV) befördert werden. Das wenigstes eine Regalgestell kann somit in Bezug auf das Regallager ein mobiles Sortierziel mit einer Vielzahl Endstellen bereitstellen. Beispielsweise können zur Erweiterung der Kapazität des Regallagers mit Objekten und/oder Endstellen, etwa Behältern, vorzugsweise Versandbehältern, befüllte Regalgestelle durch zumindest teilweise unbefüllte Regalgestelle ausgetauscht werden. Der Austausch kann vorzugsweise mithilfe eines fahrerlosen Transportsystems erfolgen.

Zumindest einige der Endstellen des zweiten Sorters können Versandbehälter sein, vorzugsweise Beutel oder Kartons. Dabei kann es insbesondere bei Anwendung der Sortieranordnung in der Versandlogistik gewünscht sein, zu versendende Waren und Güter unverpackt einem Versandbehälter zuzuführen. Darüber hinaus können bei dieser Ausführungsform die Regalfächer als Zwischenlager für in den Versandbehältern kommissionierte Güter und Waren dienen, abweichend von der üblichen Verwendung von automatischen Kleinteilelagern, bei denen in den Regalfächern üblicherweise große Mengen derselben Teile, zum Beispiel Schrauben, vorbehalten sind.

Gemäß einem anderen Aspekt wird ein Verfahren für die Sortierung von Gütern und Waren, vorzugsweise unter Verwendung einer zuvor beschriebenen Sortieranordnung, beschrieben. Das Verfahren kann die Schritte aufweisen:
- Sortieren von Waren oder Gütern, vorzugsweise von Versandartikeln, mit einem ersten Sorter, der eine Vielzahl erster Lastaufnahmemittel aufweist, die in einer ersten Sortierebene gefördert sind, und mit einem zweiten Sorter, der wenigstens ein zweites Lastaufnahmemittel aufweist, das in einer zu der ersten Sortierebene senkrecht stehenden zweiten Sortierebene gefördert ist;
- Entleeren wenigstens eines der ersten Lastaufnahmemittel, vorzugsweise unmittelbar, in das mindestens eine zweite Lastaufnahmemittel an einer Übergabe der Sortieranordnung.

Für das unmittelbare Entleeren kann die mindestens eine Ware oder das mindestens eine Gut von dem ersten Lastaufnahmemittel in das zweite Lastaufnahmemittel gekippt, abgeworfen und/oder mit einer Rutsche von dem ersten an das zweite Lastaufnahmemittel überführt werden.

Wenn die mindestens eine Ware oder das mindestens eine Gut von dem ersten Lastaufnahmemittel in das zweite Lastaufnahmemittel abgeworfen wird, kann das Verfahren weiterhin das Öffnen eines Taschenbodens des ersten Lastaufnahmemittels aufweisen, beispielsweise das drahtlose Öffnen des Taschenbodens. Eine Tasche mit öffenbarem Taschenboden ist aus der DE 10 2021003 096 A1 bekannt. Weitere Lastaufnahmemittel mit öffenbarem Taschenboden sind aus der DE 10 2018 209 266 A1 bekannt.

Das erste Lastaufnahmemittel kann für das Abwerfen oberhalb von einem der zweiten Lastaufnahmemittel oder an einem oberen Ende einer Rutsche angeordnet werden, deren unteres Ende in eines der zweiten Lastaufnahmemittel mündet.

Das Entleeren kann das Entleeren der mindestens einen Ware oder des mindestens einen Guts in einen Versandbehälter aufweisen.

Weitere Einzelheiten der Erfindung werden anhand der nachstehenden Figuren erläutert. Dabei zeigt:
- Figur 1: in schematischer Darstellung eine beispielhafte Ausführungsform einer erfindungsgemäßen Sortieranordnung;
- Figur 2: eine weitere beispielhafte Ausführungsform einer erfindungsgemäßen Sortieranordnung, bei der der Umlaufsorter ein Taschensorter ist;
- Figur 3: eine weitere beispielhafte Ausführungsformeiner erfindungsgemäßen Sortieranordnung, bei der der Umlaufsorter als Liegesorter ausgebildet ist.

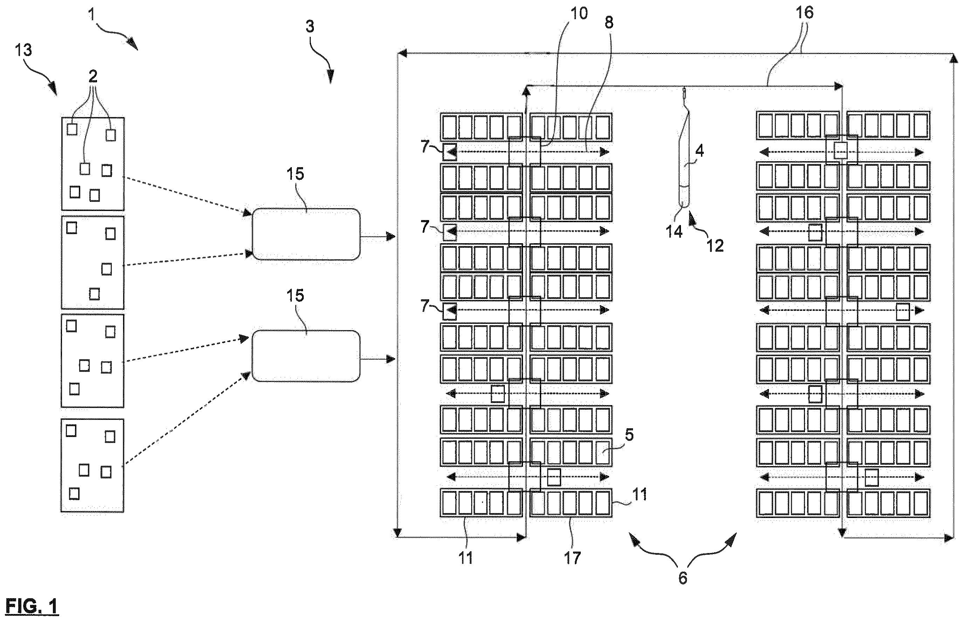

Die Figur 1 zeigt eine beispielhafte Ausführungsform einer erfindungsgemäßen Sortieranordnung 1 für Güter und Waren 2. Die Sortieranordnung 1 weist einen Umlaufsorter 3 auf, der vorliegend als ein Taschensorter ausgebildet ist, mit einer Mehrzahl entlang einer Förderstrecke 16 transportierter Taschen 12, welche die ersten Lastaufnahmemittel 4 des Umlaufsorters bilden. Die Taschen 12 weisen einen öffenbaren Boden 14 auf. Der Boden 14 kann eine drahtlose Fernauslösung aufweisen, so dass ohne äußere Einwirkung auf die Tasche 12 die Tasche 12 an einer beliebigen Stelle im Raum, und damit zum Beispiel in einen Kommissionierbereich 10 geöffnet werden kann, um eine in der Tasche 12 gehaltene Ware oder ein Gut 2 in den Kommissionierbereich 10 zu entladen. Die Bereitstellung eines Kommissionierbereichs 10 ist jedoch optional. Insbesondere Ausführungsformen, bei denen das erste Lastaufnahmemittel 4 unmittelbar in das zweite Lastaufnahmemittel 7 entleert wird, ist ein Kommissionierbereich nicht erforderlich.

In einem Vorrat 13 sind eine Vielzahl Waren und Güter 2 vorgehalten. Der Vorrat 13 kann beispielsweise von einem Hochregallager bereitgestellt sein. Manuell, automatisch oder halbautomatisch können aus dem Vorrat 13 beispielsweise für den Versand vorgesehene Waren und Güter 2 entnommen und über einer Einschleusung 15 in den Umlaufsorter 3, vorliegend den Taschensorter, eingeschleust werden. Die Einschleusung kann eine Mehrzahl Taschenbeladestationen aufweisen, an denen manuell die aus dem Vorrat 13 entnommenen Waren und Güter 2 in der Einschleusung 15 zugeführte leere Taschen 12 eingelegt werden. Mit der Einschleusung 15 werden die beladenen Taschen 12 auf die Förderstrecke 16 eingeschleust und anschließend entlang der dargestellten, umlaufenden Förderstrecke 16 transportiert. Die Förderstrecke 16 passiert eine Vielzahl Regalgestelle 17 mit jeweils einer Vielzahl Regalfächer 11, in denen zweite Lastaufnahmemittel 7 aufgenommen sind. Die zweiten Lastaufnahmemittel 7 können beispielsweise Versandbehälter, etwa Kartons oder Versandbeutel, sein. Bei dem Passieren bzw. Durchqueren der Regalreihen passieren die Taschen 12 die Übergabe 8, an der zum Beispiel eine Endstelle des Umlaufsorters 3 in einem Kommissionierbereich 10 des automatischen Regallagers 6 angeordnet sein kann.

Die Endstelle des Umlaufsorters 3 ist vorliegend allein dadurch gekennzeichnet, dass eine zu entladende Tasche 12 des Umlaufsorters 3 eine Position in Bezug auf den Kommissionierbereich 10 einnimmt, in welcher die Tasche 12 in das zweite Lastaufnahmemittel 7 entladen werden soll. Es ist lediglich erforderlich, die Position der zu entladenden Tasche 12 in Bezug auf den Kommissionierbereich 10 mit ausreichender Präzision zu bestimmen. Dies kann beispielsweise mit Hilfe eines an der Tasche oder einem Taschenmitnehmer (Carrier) angeordneten RFID-Chips erfolgen, welcher an einem Lesegerät an der Förderstrecke 16 im Bereich des Kommissionierbereichs 10 ausgelesen wird. Es sind auch andere, beispielsweise rein mechanische Methoden zur Bestimmung der Taschenposition in Bezug auf die Förderstrecke 16 im Stand der Technik bekannt. Die genannten Endstellen und der Kommissionierbereich 10 können somit bei Ausführungsformen der Erfindung entfallen.

Wenn die Tasche 12 den Kommissionierbereich 10 erreicht, kann sie vorzugsweise drahtlos und ohne äußere, insbesondere mechanische Einwirkung entladen werden. Dazu kann der Taschenboden 14 geöffnet werden. Zu diesem Zweck kann der Taschenboden 14 zwei miteinander verbundene und voneinander lösbare Taschenbodenhälften aufweisen. Die Tasche kann einen drahtlos ansteuerbaren Aktor aufweisen, beispielsweise im Taschenboden, welcher die Taschenbodenhälften auf einen Steuerbefehl hin entriegelt. Es können Magnete in den Taschenbodenhälften vorgesehen sein, welche nach erfolgtem Öffnen und Abwerfen der Ware oder des Guts 2 in den Kommissionierbereich 10 die beiden Taschenhälften wieder miteinander verbinden, sodass eine erneute Beladung der Tasche 12 an der Einschleusung 15 erfolgen kann.

Nachdem die Ware oder das Gut 2 von der Tasche 12 in den Kommissionierbereich 10 übergeben worden ist, beispielsweise in diesen abgeworfen wurde, wobei sie vorzugsweise unmittelbar in das bzw. eines der zweiten Lastaufnahmemittel des Regalbediengeräts 9 des automatischen Regallagers 6 abgeworfen wird, kann sie mit dem Regalbediengerät 9 einem vorbestimmte Regalfach 11 des automatischen Regallagers 6 zugeführt werden und dort einschließlich des zweiten Lastaufnahmemittels, beispielsweise einer Versandverpackung, in einem Regalfach 11 abgelegt werden.

Je nach Ausführungsform kann vorgesehen sein, dass in dem Übergabebereich die Waren und Güter 2 in einen von dem Regalbediengerät 9 transportierten Behälter überführt werden, wobei das Regalbediengerät 9 dazu eingerichtet ist, den Behälter, beispielsweise einen Versandbehälter, in einem der Regalfächer 11 abzustellen. Bevorzugt ist das zweite Lastaufnahmemittel 7 eine Lastaufnahme des Regalbediengeräts 9 ist, beispielsweise eine Schale, etwa eine verschwenkbare Schale, mit welcher das Regalbediengerät 9 die in das zweite Lastaufnahmemittel 7 entladene Ware oder das Gut 2 einem in einem der Regalfächer 11 vorgehaltenen Behälter, mithin einer Endstelle 9 des zweiten Sorters, zuführt, beispielsweise dort hinein abkippt.

Alternativ ist die Ausführungsform, bei welcher mit dem Regalbediengerät 9 die in den Regalfächern 11 vorgehaltenen Endstellen 5, beispielsweise Behälter, insbesondere Transportbehälter, dem Kommissionierbereich 10 zugeführt werden, und im Kommissionierbereich die ersten Lastaufnahmemittel 4 unmittelbar in das zweite Lastaufnahmemittel 5, mithin die Endstelle 5, entleert werden, sodass anschließend das Regalbediengerät 9 das beladene zweite Lastaufnahmemittel 7 wieder in eines der Regalfächer 11 zurücktransportieren kann. Im Anschluss daran kann das Regalbediengerät 9 aus einem weiteren Regalfach 11 eine weitere Endstelle 9, beispielsweise einen Behälter, vorzugsweise einen Versandbehälter, entnehmen, welche in dem Kommissionierbereich 10 als nächstes mit einer Ware oder einem Gut 2, welches aus einem der ersten Lastaufnahmemittel 4 entleert wird, beladen wird.

Die Förderrichtung der Förderstrecke 16 im Bereich der Regalgestelle 17 erstreckt sich senkrecht zu einer Längsrichtung einer von den Regalgestellen 17 gebildeten Regalreihe, wobei jeweils zwei Regalgestelle 17 eine Regalreihe bilden und die Förderstrecke 16 zwischen den beiden die Regalreihe bildenden Regalgestellen 17 hindurchgeführt ist. Das Regalbediengerät 7 transportiert die zweiten Lastaufnahmemittel 7 parallel zu der Regalreihe sowie in Vertikalrichtung. Mithin wird durch die Kombination des Umlaufsorters 3, welcher die ersten Lastaufnahmemittel in der Horizontalebene fördert, mit dem automatischen Regallager 6 eine Sortierung in allen drei Raumdimensionen bereitgestellt. Hierdurch ergibt sich eine effektive Ausnutzung der Lagerfläche und damit eine Optimierung des Footprints der Sortieranordnung.

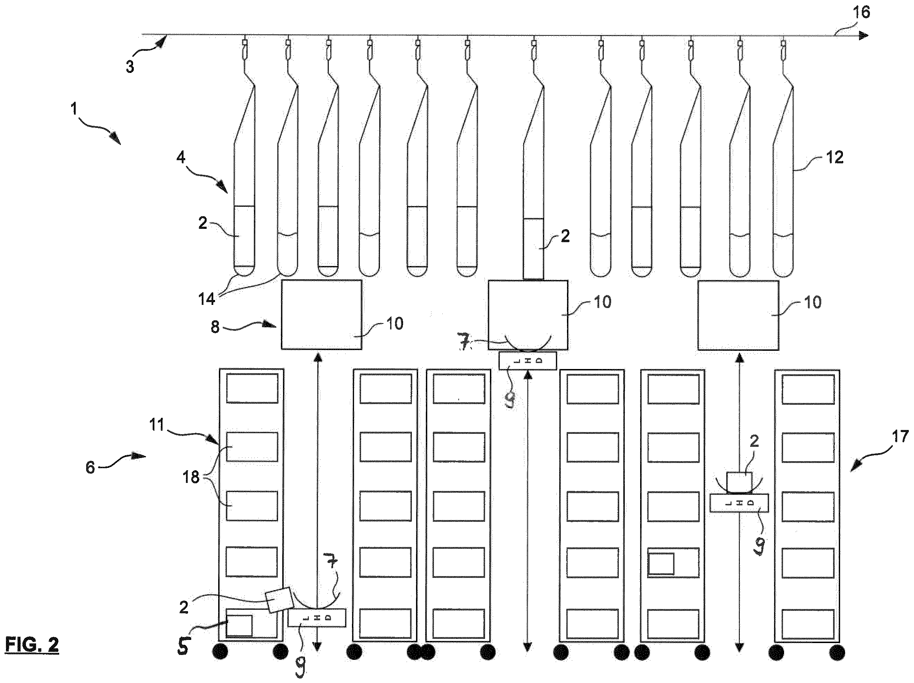

Bei der Figur 2 dargestellten Ausführungsform handelt es sich um eine besondere Variante der in Figur 1 gezeigten Ausführungsform einer erfindungsgemäßen Sortieranordnung 1. Analog zu der Ausführungsform gemäß Figur 1 ist der Umlaufsorter 3 als ein Taschensorter ausgebildet, mit einer Vielzahl als Taschen 12 ausgebildeter erster Lastaufnahmemittel 4, die entlang einer Förderstrecke 16 transportiert sind. An einer Übergabe 8 zwischen dem Umlaufsorter 3 und einem automatischen Regallager 6 erreichen die Taschen 12 eine Endstelle 5, an welcher sie entladen werden sollen. Wie bereits mit Bezug auf Figur 1 beschrieben wurde, kann die Endstelle 5 bei einer Ausführungsform dadurch realisiert sein, dass die relative Position einer bestimmten Tasche 12 in Bezug auf den Kommissionierbereich 10 bestimmt wird und die Entladung der Tasche freigegeben wird. Für das Entladen der Tasche kann ein Taschenboden 14 geöffnet werden, sodass die in der Tasche 12 vorgehaltene Ware 2 aus der Tasche 12 in den Kommissionierbereich 10 fällt.

Im Übrigen beschriebt die Ausführungsform gemäß Figur 2 diejenige Variante, bei der das zweite Lastaufnahmemittel 7 von dem Regalbediengerät 9, vorliegend einer Schale des Regalbediengeräts 9, bereitgestellt wird. Mithin werden in dem Übergabebereich 10 die Waren und Güter 2 unmittelbar auf das zweite Lastaufnahmemittel 7 des Regalbediengeräts 9, abgeworfen und von dem Regalbediengerät 9, mithin aus der Schale des zweiten Lastaufnahmemittels 7 in eine Endstelle 5, hier einen Versandbehälter 18, der in einem Regalfach 11 der Regalgestelle 17 vorgehalten ist, abgeworfen, beispielsweise durch Verkippen der Schale.

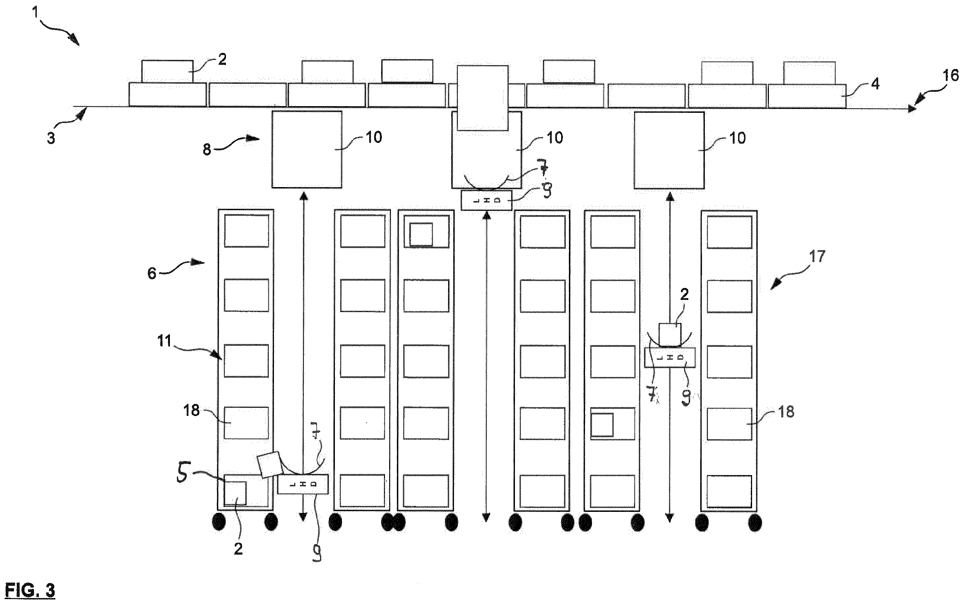

Abweichend von der in Figur 2 dargestellten Ausführungsform ist bei der Ausführungsform gemäß Figur 3 der Umlaufsorter 3 als ein Liegesorter ausgebildet, beispielsweise als ein Quergurt-Sorter mit einer Vielzahl entlang der Förderstrecke 16 angeordneter erster Lastaufnahmemittel 4, die beispielsweise Quergurte sein können, die quer zur Förderrichtung der Förderstrecke 16 angesteuert werden können, um an der Übergabe 8 bzw. der Endstelle eine auf dem Quergurt transportierte Ware oder ein Gut in den Kommissionierbereich 10 abzuwerfen. Zur Präzisierung der Abwurfbewegung kann eine Rutsche (nicht dargestellt) vorgesehen sein, welche stromabwärts konvergierende Seitenwände aufweist und in den Kommissionierbereich 10 mündet. Dies soll ermöglichen, dass selbst bei hohen Vorschubgeschwindigkeiten der ersten Lastaufnahmemittel 4 entlang der Förderstrecke 16 ein präziser Abwurf von Waren und Gütern 2 unmittelbar in das als Schale ausgebildete zweite Lastaufnahmemittel 5 des Regalbediengeräts erreicht wird.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Sortieranordnung
- 2: Ware oder Gut
- 3: Umlaufsorter
- 4: Erstes Lastaufnahmemittel
- 5: Endstelle/Behälter
- 6: Regellager
- 7: zweites Lastaufnahmemittel
- 8: Übergabe
- 9: Bediengerät
- 10: Kommissionierbereich
- 11: Regalfach
- 12: Tasche
- 13: Vorrat
- 14: Taschenboden
- 15: Einschleusung
- 16: Förderstrecke
- 17: Regalgestell

## Patentansprüche

1. Sortieranordnung (1) für Güter und Waren (2), wobei die Sortieranordnung (1) mindestens einen ersten Sorter (3) mit ersten Lastaufnahmemitteln (4), die in einer ersten Sortierebene gefördert sind, und mindestens einen zweiten Sorter (6) mit mindestens einem zweiten Lastaufnahmemittel (7) aufweist, die in einer zu der ersten Sortierebene senkrecht stehenden zweiten Sortierebene gefördert sind, **dadurch gekennzeichnet, dass** die Sortieranordnung (1) eine Übergabe (8) aufweist, an der wenigstens eines der ersten Lastaufnahmemittel (4), vorzugsweise unmittelbar, in das mindestens eine zweite Lastaufnahmemittel (7) entleert ist.

2. Sortieranordnung (1) nach Anspruch 1, bei der der erste oder der zweite Sorter (3, 6) ein Umlaufsorter, insbesondere ein Liegesorter oder ein Taschensorter, und/oder der andere Sorter (3, 6) ein Regallager (6) mit einem in der zweiten Sortierebene verfahrbaren Bediengerät(9), vorzugsweise einem Regalbediengerät oder einem Roboter, ist, wobei das mindestens eine zweite Lastaufnahmemittel (7) von dem Bediengerät (9) in der zweiten Sortierebene bewegt ist.

3. Sortieranordnung (1) nach Anspruch 2, bei der der mindestens eine Umlaufsorter (3) ein Liegesorter oder ein Taschensorter und/oder das mindestens eine Regallager (6) ein automatisches Regallager ist.

4. Sortieranordnung (1) nach einem der Ansprüche 2 bis 3, bei der das Bediengerät (9) dazu eingerichtet ist, das zweite Lastaufnahmemittel (7) zwischen der Übergabe (8) und mindestens einer Endstelle (5) des zweiten Sorters, vorzugsweise zur Oberseite offene Behälter, besonders bevorzugt Versandbehälter, in einem Regalfach (11) des Regallagers (6) zu transportieren.

5. Sortieranordnung (1) nach einem der vorangegangenen Ansprüche, bei der die Übergabe (8) eine Rutsche für Waren und Güter (2) aufweist, auf welche die ersten Lastaufnahmemittel (4) entleert werden können und welche abstromseitig in das mindestens eine zweite Lastaufnahmemittel (7) mündet.

6. Sortieranordnung (1) nach einem der vorangegangenen Ansprüche, bei der der mindestens eine erste Sorter (3) ein Taschensorter ist, wobei an der Übergabe (8) eine Taschenentleerung angeordnet ist, mit der mindestens eines der ersten Lastaufnahmemittel (4) in das mindestens eine zweite Lastaufnahmemittel (7), vorzugsweise unmittelbar, entleert ist.

7. Sortieranordnung (1) nach einem der vorangegangenen Ansprüche, bei der an der Übergabe (8) mindestens eines der ersten Lastaufnahmemittel (4), vorzugsweise mindestens eine Tasche (12) eines Taschensorters, oberhalb des mindestens einen zweiten Lastaufnahmemittels (7) angeordnet und frei fallend in das zweite Lastaufnahmemittel (7) entleert ist.

8. Sortieranordnung (1) nach einem der Ansprüche 2 bis 7, bei der das Regallager (6) mindestens ein Regalgestell (17) mit einer Mehrzahl übereinander angeordneter Regalfächer (11) zur Aufnahme einer Vielzahl Endstellen (5) des Regallagers (6) aufweist oder ist.

9. Sortieranordnung (1) nach Anspruch 8, bei der das Regallager (6) wenigstens eine Reihe von auf Laufrollen verfahrbaren Regalgestellen (17) mit einer Mehrzahl übereinander angeordneter Regalfächer (11) zur Aufnahme der Endstellen (5) aufweist.

10. Sortieranordnung (1) nach einem der vorangegangenen Ansprüche, bei der das zumindest eine zweite Lastaufnahmemittel (7) eine Endstelle (9), etwa ein Versandbehälter (18) ist oder aufweist, vorzugsweise ein Beutel oder ein Karton.

11. Verfahren für die Sortierung von Gütern und Waren (2), vorzugsweise mit einer Sortieranordnung (1) nach einem der vorangegangenen Ansprüche, wobei das Verfahren die Schritte aufweist:
- Sortieren von Waren oder Gütern (2), vorzugsweise von Versandartikeln, mit einem ersten Sorter (3), der eine Vielzahl erster Lastaufnahmemittel (4) aufweist, die in einer ersten Sortierebene gefördert sind, und mit einem zweiten Sorter (6), der wenigstens ein zweites Lastaufnahmemittel (5) aufweist, das in einer zu der ersten Sortierebene senkrecht stehenden zweiten Sortierebene gefördert ist;
- Entleeren wenigstens eines der ersten Lastaufnahmemittel (4), vorzugsweise unmittelbar, in das mindestens eine zweite Lastaufnahmemittel (7) an einer Übergabe (8) der Sortieranordnung (1).

12. Verfahren nach Anspruch 11, bei dem das Entleeren der mindestens einen Ware (2) oder des mindestens einen Guts (2) unmittelbar von einem der ersten Lastaufnahmemittel (4) in das wenigstens eine zweite Lastaufnahmemittel (5) erfolgt.

13. Verfahren nach Anspruch 12, bei dem für das Entleeren die mindestens eine Ware (2) oder das mindestens eine Gut (2) von dem ersten Lastaufnahmemittel (4) in das zweite Lastaufnahmemittel (5) abgeworfen oder gekippt wird, wobei das Verfahren vorzugsweise das Öffnen eines Taschenbodens (14) des ersten Lastaufnahmemittels (4) aufweist, besonders bevorzugt das drahtlose Öffnen des Taschenbodens (5).

14. Verfahren nach Anspruch 13, bei dem das erste Lastaufnahmemittel (4) für das Abwerfen in Lotrichtung oberhalb von dem zweiten Lastaufnahmemittel (5) oder an einem oberen Ende einer Rutsche angeordnet wird, deren unteres Ende in das zweite Lastaufnahmemittel (5) mündet.

15. Verfahren nach einem der Ansprüche 11 bis 14, das nach dem Entleeren des ersten Lastaufnahmemittels (4) in das mindestens eine zweite Lastaufnahmemittel (7) das Übergeben der mindestens einen Ware (2) oder des mindestens einen Guts (2) von dem zweiten Lastaufnahmemittel (7) in eine Endstelle (5) in einem Regalfach (11) eines Regallagers (6), vorzugsweise in einen Versandbehälter (18), aufweist.

## Geänderte Patentansprüche

### Geänderte Patentansprüche gemäss Regel 137(2) EPÜ.

1. Sortieranordnung (1) für Güter und Waren (2), wobei die Sortieranordnung (1) mindestens einen ersten Sorter (3) mit ersten Lastaufnahmemitteln (4), die in einer ersten Sortierebene förderbar sind, und mindestens einen zweiten Sorter (6) mit mindestens einem zweiten Lastaufnahmemittel (7) aufweist, die in einer zu der ersten Sortierebene senkrecht stehenden zweiten Sortierebene förderbar sind, **dadurch gekennzeichnet, dass** die Sortieranordnung (1) eine Übergabe (8) aufweist, an der wenigstens eines der ersten Lastaufnahmemittel (4) unmittelbar in das mindestens eine zweite Lastaufnahmemittel (7) entleerbar ist, wobei an der Übergabe (8) mindestens eines der ersten Lastaufnahmemittel (4), oberhalb des mindestens einen zweiten Lastaufnahmemittels (7) angeordnet und frei fallend in das zweite Lastaufnahmemittel (7) entleerbar ist.

2. Sortieranordnung (1) nach Anspruch 1, bei der der erste oder der zweite Sorter (3, 6) ein Umlaufsorter, insbesondere ein Liegesorter oder ein Taschensorter, und/oder der andere Sorter (3, 6) ein Regallager (6) mit einem in der zweiten Sortierebene verfahrbaren Bediengerät(9), vorzugsweise einem Regalbediengerät oder einem Roboter, ist, wobei das mindestens eine zweite Lastaufnahmemittel (7) von dem Bediengerät (9) in der zweiten Sortierebene bewegbar ist.

3. Sortieranordnung (1) nach Anspruch 2, bei der der mindestens eine Umlaufsorter (3) ein Liegesorter oder ein Taschensorter und/oder das mindestens eine Regallager (6) ein automatisches Regallager ist.

4. Sortieranordnung (1) nach einem der Ansprüche 2 bis 3, bei der das Bediengerät (9) dazu eingerichtet ist, das zweite Lastaufnahmemittel (7) zwischen der Übergabe (8) und mindestens einer Endstelle (5) des zweiten Sorters, vorzugsweise zur Oberseite offene Behälter, besonders bevorzugt Versandbehälter, in einem Regalfach (11) des Regallagers (6) zu transportieren.

5. Sortieranordnung (1) nach einem der vorangegangenen Ansprüche, bei der die Übergabe (8) eine Rutsche für Waren und Güter (2) aufweist, auf welche die ersten Lastaufnahmemittel (4) entleert werden können und welche abstromseitig in das mindestens eine zweite Lastaufnahmemittel (7) mündet.

6. Sortieranordnung (1) nach einem der vorangegangenen Ansprüche, bei der der mindestens eine erste Sorter (3) ein Taschensorter ist, wobei an der Übergabe (8) eine Taschenentleerung angeordnet ist, mit der mindestens eines der ersten Lastaufnahmemittel (4) in das mindestens eine zweite Lastaufnahmemittel (7), vorzugsweise unmittelbar, entleerbar ist.

7. Sortieranordnung (1) nach einem der vorangegangenen Ansprüche, bei der an der Übergabe (8) mindestens eine Tasche (12) eines Taschensorters, oberhalb des mindestens einen zweiten Lastaufnahmemittels (7) angeordnet und frei fallend in das zweite Lastaufnahmemittel (7) entleerbar ist.

8. Sortieranordnung (1) nach einem der Ansprüche 2 bis 7, bei der das Regallager (6) mindestens ein Regalgestell (17) mit einer Mehrzahl übereinander angeordneter Regalfächer (11) zur Aufnahme einer Vielzahl Endstellen (5) des Regallagers (6) aufweist oder ist.

9. Sortieranordnung (1) nach Anspruch 8, bei der das Regallager (6) wenigstens eine Reihe von auf Laufrollen verfahrbaren Regalgestellen (17) mit einer Mehrzahl übereinander angeordneter Regalfächer (11) zur Aufnahme der Endstellen (5) aufweist.

10. Sortieranordnung (1) nach einem der vorangegangenen Ansprüche, bei der das zumindest eine zweite Lastaufnahmemittel (7) eine Endstelle (9), etwa ein Versandbehälter (18) ist oder aufweist, vorzugsweise ein Beutel oder ein Karton.

11. Verfahren für die Sortierung von Gütern und Waren (2), vorzugsweise mit einer Sortieranordnung (1) nach einem der vorangegangenen Ansprüche, wobei das Verfahren die Schritte aufweist:
- Sortieren von Waren oder Gütern (2), vorzugsweise von Versandartikeln, mit einem ersten Sorter (3), der eine Vielzahl erster Lastaufnahmemittel (4) aufweist, die in einer ersten Sortierebene gefördert sind, und mit einem zweiten Sorter (6), der wenigstens ein zweites Lastaufnahmemittel (5) aufweist, das in einer zu der ersten Sortierebene senkrecht stehenden zweiten Sortierebene gefördert ist;
- Entleeren wenigstens eines der ersten Lastaufnahmemittel (4) unmittelbar und frei fallend in das mindestens eine zweite Lastaufnahmemittel (7) an einer Übergabe (8) der Sortieranordnung (1), wobei an der Übergabe (8) mindestens eines der ersten Lastaufnahmemittel (4), oberhalb des mindestens einen zweiten Lastaufnahmemittels (7) angeordnet ist.

12. Verfahren nach Anspruch 11, bei dem für das Entleeren die mindestens eine Ware (2) oder das mindestens eine Gut (2) von dem ersten Lastaufnahmemittel (4) in das zweite Lastaufnahmemittel (5) abgeworfen oder gekippt wird, wobei das Verfahren vorzugsweise das Öffnen eines Taschenbodens (14) des ersten Lastaufnahmemittels (4) aufweist, besonders bevorzugt das drahtlose Öffnen des Taschenbodens (5).

13. Verfahren nach Anspruch 11, bei dem das erste Lastaufnahmemittel (4) für das Abwerfen in Lotrichtung oberhalb von dem zweiten Lastaufnahmemittel (5) oder an einem oberen Ende einer Rutsche angeordnet wird, deren unteres Ende in das zweite Lastaufnahmemittel (5) mündet.

14. Verfahren nach einem der Ansprüche 11 bis 13, das nach dem Entleeren des ersten Lastaufnahmemittels (4) in das mindestens eine zweite Lastaufnahmemittel (7) das Übergeben der mindestens einen Ware (2) oder des mindestens einen Guts (2) von dem zweiten Lastaufnahmemittel (7) in eine Endstelle (5) in einem Regalfach (11) eines Regallagers (6), vorzugsweise in einen Versandbehälter (18), aufweist.
